# EUROPÄISCHE PATENTSCHRIFT

(11) **EP 3 851 235 B1**
(45) Veröffentlichungstag und Bekanntmachung des Hinweises auf die Patenterteilung: **13.03.2024**
(21) Anmeldenummer: 20151944.4
(22) Anmeldetag: 15.01.2020
(51) Int. Cl.: B23K 1/015, B23K 3/047, B23K 101/42

(54) **VORRICHTUNG UND VERFAHREN ZUR GESTEUERTEN WÄRMEÜBERTRAGUNG, INSBESONDERE DURCH EINE KONDENSIERENDE FLÜSSIGKEIT AUF WERKSTÜCKE GRÖSSERER ABMESSUNGEN UND MASSEN**
DEVICE AND METHOD FOR CONTROLLED HEAT TRANSFER, IN PARTICULAR BY A CONDENSING LIQUID ON WORKPIECES OF LARGER DIMENSIONS AND MASSES
DISPOSITIF ET PROCÉDÉ DE TRANSFERT DE CHALEUR COMMANDÉ, EN PARTICULIER À L'AIDE D'UN LIQUIDE DE CONDENSATION SUR DES PIÈCES DE PLUS GRANDES DIMENSIONS ET MASSES

(43) Veröffentlichungstag der Anmeldung: 21.07.2021
(73) Patentinhaber: Leicht, Eva Maria, 91320 Ebermannstadt (DE)
(72) Erfinder: Leicht, Helmut Walter, verstorben (DE)
(74) Vertreter: Vossius & Partner Patentanwälte Rechtsanwälte mbB

(56) Entgegenhaltungen:
- DE-A1-102009 028 865
- JP-A- H01 150 465
- JP-A- H07 273 442
- JP-A- H07 273 443
- US-A1- 2009 014 503

## Beschreibung

### Gebiet der Erfindung

Die vorliegende Erfindung betrifft eine Vorrichtung, eine System bestehend aus mehreren Vorrichtungen sowie ein Verfahren zur gesteuerten Wärmeübertragung, insbesondere durch eine kondensierende Flüssigkeit auf Werkstücke größerer Abmessungen und Massen. Die Erfindung eignet sich insbesondere zum Löten von Lötgut in einer Dampfphasenzone. Bevorzugt sind eine Vorrichtung und ein Verfahren zum Ableiten und zur Rückgewinnung von Dampf, der beim Eintauchen des Werkstücks oder des Lötguts in die Dampfphasenzone aus der Kammer austritt, in der die Dampfphasenzone gebildet wird.

### Stand der Technik

Beim Dampfphasenlöten kommt es im Zuge des Eintauchvorgangs des Lötguts in die Dampfphasenzone üblicherweise zu einem Austritt des durch das Lötgut und dessen Halteeinrichtung verdrängten Dampfes aus der beheizten Kammer, in der die Dampfphasenzone gebildet wird. Dies ist nachteilig, da die chemischen Substanzen zur Bildung der Dampfphasenzone teuer sind. Daher ist es wünschenswert Verluste, aufgrund des Austritts von Dampf beim Dampfphasenlöten gering zu halten.

Eine Möglichkeit besteht in der Verwendung von Schleusen oder darin, die Seitenwände der beheizten Kammer zu erhöhen, damit der durch das Lötgut verdrängten Dampf nicht aus der beheizten Kammeraustritt. Ein wesentlicher Nachteil hierbei ist jedoch, dass sich der Eintauchvorgang des Lötguts in die Dampfphasenzone durch die Erhöhung der Seitenwände der beheizten Kammer verlängert, da eine größere Strecke zurückgelegt werden muss, um das Lötgut in die Dampfphasenzone einzubringen. Dies wirkt sich negativ auf die Durchlaufzeit des Lötguts im Gesamtprozess aus.

In EP 0 629 148 B1 ist eine einfache, platzsparende Transportvorrichtung zum Beschicken und Ausgeben von Lötgut in einer Dampfphasenlötanlage beschrieben, bei der das Lötgut über einen schwenkbaren Lötgutträger in die Dampfphase eingebracht bzw. daraus entfernt wird. Die Transportvorrichtung weist lediglich eine Schleuse auf, wodurch der Verlust von Dampf beim Einbringen bzw. Entfernen des Lötguts reduziert wird. Durch das Einbringen und Entfernen des Lötguts über eine einzige Schleuse verlängert sich jedoch die Durchlaufzeit des Lötguts im Fertigungsprozess. Weiterhin muss der Lötgutträger eine relativ komplexe Kinematik aufweisen. Ein besonderer Nachteil der beschriebenen Transportvorrichtung ist, dass durch die Bewegung des Lötgutträgers inklusive Lötgut große Massen bewegt werden, was sich nachteilig auf den Energieverbrauch des Gesamtprozesses auswirkt.

Die DE 199 11 887 C1 bezieht sich auf ein Verfahren zum Reflow-Löten in einer Dampfphasenvakuumlötanlage bei dem das Lötgut, nachdem es in einer Dampfphase erhitzt wurde, in eine Vakuumkammer transportiert wird, um Lunker aus dem Lot zu entfernen. Die Vakuumkammer befindet sich oberhalb der Dampfphasenzone innerhalb der Dampfphasenkammer. Das Lötgut wird daher zuerst in die Dampfphase eingetaucht und danach zur Vakuumkammer angehoben, was abermals eine verhältnismäßig komplizierte Hubvorrichtung erfordert, bei der es leicht zu Erschütterungen des Lötguts kommen kann.

Das Patent US 4,321,031 bezieht sich auf eine mehrstufige Vorrichtung zum Dampflöten, bei dem Dampf von oben auf das Lötgut geleitet wird und bei Kontakt die Wärme auf das Lötgut überträgt. Der dabei aus der Dampfkammer austretende Dampf wird über Transportgase rücktransportiert und der Dampfkammer wieder zugeführt, nachdem die Transportgase separiert wurden. Durch das Einleiten des Dampfes von oben lässt sich jedoch die Löttemperatur nur schwer regeln, was durch eine ungleiche Temperaturverteilung einen negativen Einfluss auf die Qualität des Lötguts haben kann.

Die JP H07 273442 A offenbart eine Vorrichtung gemäß dem Oberbegriff von Patentanspruch 1.

Der vorliegenden Erfindung liegt die daher die Aufgabe zu Grunde, eine gesteuerte Wärmeübertragung, insbesondere durch eine kondensierende Flüssigkeit, auf Werkstücke größerer Abmessungen und Massen zu ermöglichen. Durch Anwenden dieser Erfindung soll das Löten in einer Dampfphasenzone beschleunigt und insbesondere der Eintauchvorgang des Lötguts in die Dampfphase vereinfacht werden. Ziel ist ein erschütterungsfreier Prozeß durch Vermeidung einer Hubbewegung des Lötguts. Weiterhin ist es eine Aufgabe der vorliegenden Erfindung den überschüssigen Dampf, der durch das Eintauchen des Lötguts in die Dampfphasenzone aus der Dampfphasenzone austritt, abzuleiten und das gegebenenfalls entstehende Dampfkondensat dem Wärmeprozess bzw. dem Lötprozess wieder zuzuführen.

Die Aufgabe wird mit den Merkmalen der unabhängigen Patentansprüche gelöst. Bevorzugte Ausgestaltungen sind in den abhängigen Ansprüchen enthalten.

Im Folgenden wird die Erfindung insbesondere im Zusammenhang mit dem Löten von Lötgut erläutert; das Prinzip ist jedoch im Rahmen der Erfindung allgemein bei der Wärmeübertragung auf Werkstücke durch eine kondensierende Flüssigkeit einsetzbar.

### Kurzbeschreibung der Figuren

Die Erfindung wird anhand der beigefügten Figuren näher erläutert. Es zeigen:
- Fig. 1:: Eine schematische Ansicht der erfindungsgemäßen Vorrichtung, vor dem Eintauchen des Lötguts in die Dampfphasenzone;
- Fig. 2:: Eine schematische Ansicht der erfindungsgemäßen Vorrichtung nach dem Eintauchen des Lötguts in die Dampfphasenzone;
- Fig. 3:: Eine schematische Ansicht der erfindungsgemäßen Vorrichtung als Teil eines In-Line Produktionsprozesses;
- Fig. 4:: Eine schematische Ansicht des erfindungsgemäßen Systems mit zwei hintereinander angeordneten erfindungsgemäßen Vorrichtungen; und
- Fig. 5:: Eine schematische Ansicht des erfindungsgemäßen Systems mit zwei der erfindungsgemäßen Vorrichtungen und einer Vakuumkammer.

### Detaillierte Beschreibung der Erfindung

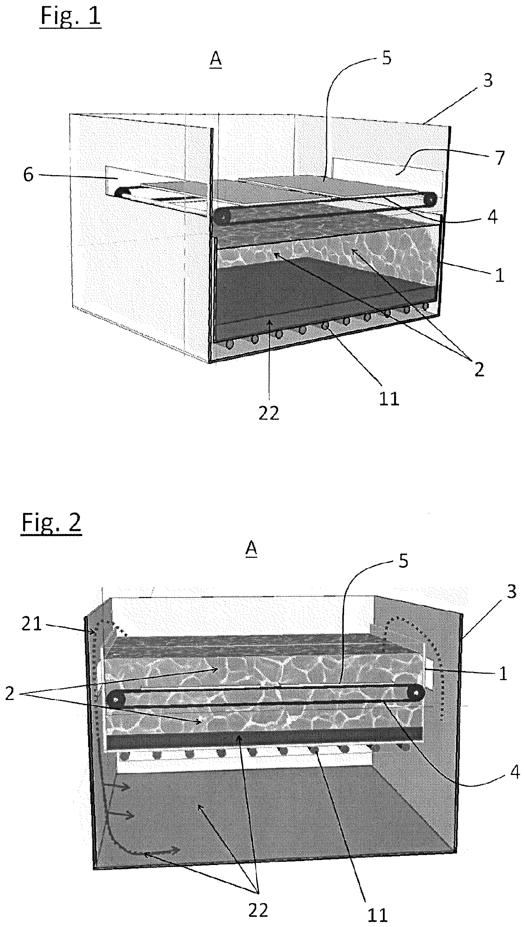

Fig. 1 zeigt eine erfindungsgemäße Vorrichtung A zum Löten von Lötgut 5 in einer Dampfphasenzone 2, vor dem Eintauchen des Lötguts 5 in die Dampfphasenzone 2. Die Vorrichtung A weist eine erste Kammer 1 und eine zweite Kammer 3 auf. Vorzugsweise sind die erste und die zweite Kammer 1, 3 an ihrer Oberseite offen. Die erste Kammer 1 verfügt über eine Heizung 11 zum Erhitzen eines Fluids 22, dass der ersten Kammer 1 zugeführt wird, so dass sich eine Dampfphasenzone 2 im oberen Teil der ersten Kammer 1 bildet.

Die zweite Kammer 3 weist an einer ihrer Seiten mindestens eine erste Schleuse 6 auf, durch die das Lötgut 5 in die zweite Kammer 3 eingebracht wird. Weiterhin ist in der zweiten Kammer 3 eine Transport- und Haltevorrichtung 4 vorgesehen, auf der das Lötgut 5 in der zweiten Kammer 3 gehalten wird. Die Schleuse 6 befindet sich in vertikaler Richtung vorzugsweise auf Höhe der Haltevorrichtung 4. Vorzugsweise weist die zweite Kammer 3 außerdem eine zweite Schleuse 7 auf. Besonders bevorzugt befindet sich die zweite Schleuse 7 an einer Seite der zweiten Kammer 3, die der Seite gegenüberliegt, an der die erste Schleuse 6 vorgesehen ist.

Die Vorrichtung A verfügt weiterhin über eine Hubeinrichtung, um die erste Kammer 1 relativ zur Halteeinrichtung 4 vertikal zu bewegen und somit das Lötgut 5 in die Dampfphasenzone 2 der ersten Kammer 1 einzutauchen, wie in Fig. 2 dargestellt ist. Die erste Kammer 1 wird dabei durch die Hubeinrichtung angehoben, um das Lötgut 5 in die Dampfphasenzone einzutauchen bzw. abgesenkt, um das Lötgut 5 aus der Dampfphasenzone 2 zu entfernen. Die Halteeinrichtung 4 bleibt dabei vorzugsweise in ihrer ursprünglichen vertikalen Position innerhalb der zweiten Kammer 3. Alternativ kann die Hubvorrichtung derart ausgestaltet sein, dass sie die Halteeinrichtung 4 mitsamt dem Lötgut 5 hebt und senkt und somit das Lötgut 5 in die Dampfphasenzone 2 der ersten Kammer 1 eintaucht bzw. daraus entfernt.

Die Vorrichtung A verfügt weiterhin über eine Einrichtung zum Ableiten von Dampf 21, der aus der ersten Kammer 1, beim Eintauchen des Lötguts 5 in die Dampfphasenzone 2 verdrängt wird und an der geöffneten Oberseite der erste Kammer 1 austritt, wie in Fig. 2 durch die gestrichelten Pfeile schematisch dargestellt ist. Die Einrichtung weist ferner eine Rückführung auf, die ausgebildet ist, um den abgeleiteten Dampf 21 bzw. gegebenenfalls entstehendes Dampfkondensat 22 zu sammeln und in die erste Kammer 1 zurückzuführen.

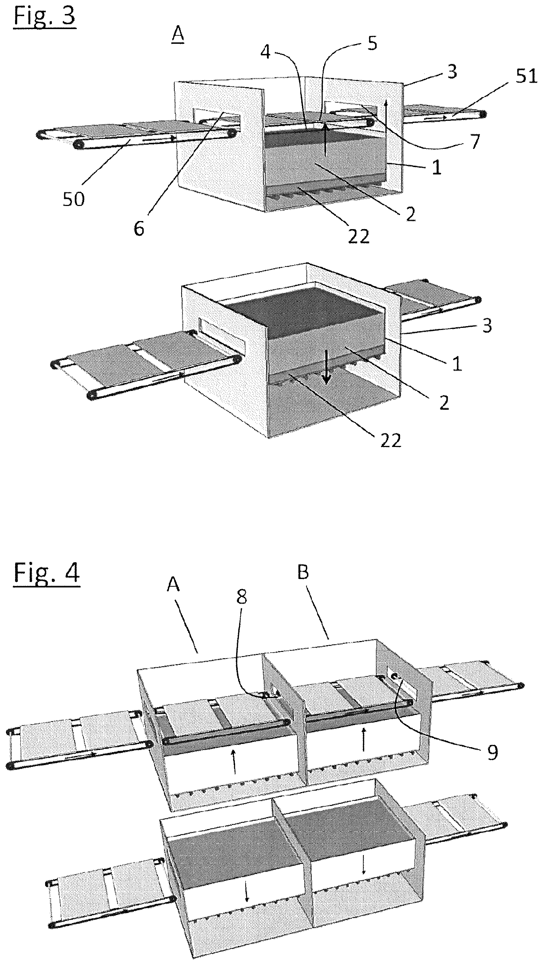

Fig. 3 zeigt schematisch die erfindungsgemäße Vorrichtung A als Teil eines In-line Produktionsprozesses gemäß der vorliegenden Erfindung. Hierbei wird das Lötgut 5 über ein erstes Transportband 50 zur ersten Schleuse 6 der zweiten Kammer 3 transportiert und auf der Halteeinrichtung 4 positioniert. Die Wärmeübertragung erfolgt, wie durch die vertikalen Pfeile in Fig. 3 dargestellt ist, durch Anheben der ersten Kammer 1, wodurch das Lötgut 5 in die Dampfphasenzone 2 eingetaucht wird. Die Halteeinrichtung 4 verbleibt dabei vorzugsweise horizontal oder geneigt in ihrer vertikalen Position innerhalb der zweiten Kammer 3. Nach der Wärmeübertragung wird das Lötgut 5 von der Halteeinrichtung 4 über die zweite Schleuse 7 zur weiteren Bearbeitung an ein zweites Transportband 51 übergeben und gegebenenfalls zu weiteren Einrichtungen des Produktionsprozesses transportiert.

Wie in Fig. 4 dargestellt ist, bezieht sich die vorliegende Erfindung außerdem auf ein System zum Löten von Lötgut 5 in einer Dampfphasenzone 2, das mindestens eine erste Vorrichtung A und mindestens eine zweite Vorrichtung B aufweist, die entlang einer Transportrichtung des Lötguts 5 (angedeutet durch die Pfeile von links nach rechts) hintereinander angeordnet sind. Die zweite Vorrichtung B des Systems ist vorzugsweise baugleich zur zuvor beschriebenen ersten Vorrichtung A. In Transportrichtung des Lötguts 5 kann das System weitere, gegebenenfalls baugleiche Vorrichtungen aufweisen.

Die erste Vorrichtung A des Systems ist mit der zweiten Vorrichtung B über eine Schleuse 8 verbunden. Durch die erste Schleuse 6 der Vorrichtung A wird das Lötgut 5 in die erste Vorrichtung A des Systems eingebracht und auf der Halteeinrichtung 4 positioniert. Die erste Vorrichtung A ist konfiguriert, um das Lötgut 5 durch Eintauchen in die Dampfphasenzone 2 vorzuwärmen. Durch die Schleuse 8 wird das vorgewärmte Lötgut 5 in die zweite Vorrichtung B transportiert, wo es durch Eintauchen in eine Dampfphasenzone 2 der Vorrichtung B, wie zuvor beschrieben, gelötet wird.

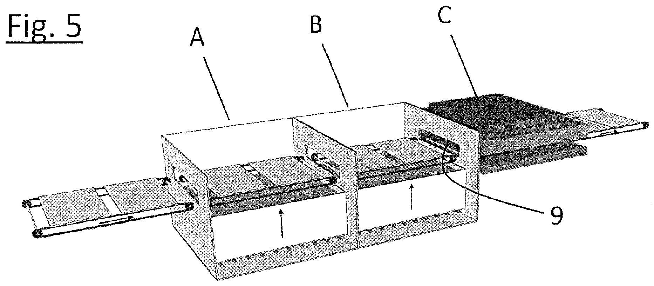

Wie in Fig. 5 dargestellt ist, kann das System weiterhin eine dritte Vorrichtung C aufweisen, die in Transportrichtung des Lötguts 5 hinter der zweiten Vorrichtung B angeordnet ist und konfiguriert ist, um durch Erzeugung eines Unterdrucks unerwünschtes gasförmiges Material aus dem Lot des Lötguts 5 zu entfernen. Die dritte Vorrichtung C ist dabei über eine weitere Schleuse 9 mit der zweiten Vorrichtung B verbunden.

Die vorliegende Erfindung bezieht sich weiterhin auf ein Verfahren zum Löten eines Lötguts 5 in einer Dampfphasenzone 2 mittels einer Vorrichtung A gemäß der vorliegenden Erfindung. In einem ersten Verfahrensschritt wird das Lötgut 5 durch die erste Schleuse 6 in die zweite Kammer 3 der Vorrichtung A eingebracht und auf der Halteeinrichtung 4 positioniert. Danach wird das Lötgut 5 in die Dampfphasenzone 2 der ersten Kammer 1 eingetaucht. Dies geschieht vorzugsweise durch Anheben der ersten Kammer 1 der Vorrichtung A, sodass die Dampfphase in der Dampfphasenzone 2 der ersten Kammer 1 das Lötgut 5 umgibt. Das Lötgut 5 wird so lange in der Dampfphasenzone 2 gehalten bis das Lot des Lötguts 5 schmilzt und der eigentliche Lötvorgang erfolgt. Danach wird das Lötgut 5 aus der Dampfphasenzone 2 entfernt. Dies geschieht vorzugsweise durch Absenken der ersten Kammer 1 relativ zur Halteeinrichtung 4. Danach wird das Lötgut 5 aus der zweiten Kammer 3 entweder durch die erste Schleuse 6, oder durch die zweite Schleuse 7 entfernt.

Der beim Eintauchen des Lötguts 5 in die Dampfphasenzone 2 verdrängte Dampf 21 wird abgeleitet. Der abgeleitete Dampf 21 bzw. das daraus gegebenenfalls entstehende Dampfkondensat 22 wird in die erste Kammer 1 zurückgeführt (nicht dargestellt).

Die vorliegende Erfindung umfasst weiterhin ein Verfahren zum Löten eines Lötguts 5 in einer Dampfphasenzone 2 mittels eines Systems, das, wie zuvor beschrieben wurde, aus mindestens zwei Vorrichtungen A und B besteht. Die einzelnen Verfahrensschritte in den Vorrichtungen A und B entsprechen dabei den zuvor beschriebenen Verfahrensschritten. Die Temperaturen der Dampfphasenzone 2 der Vorrichtung A und der Dampfphasenzone 2 der Vorrichtung B können sich unterscheiden, so dass das Lötgut 5 durch das Eintauchen in die Dampfphasenzone 2 der Vorrichtung A lediglich vorgewärmt und nicht gelötet wird. Alternativ kann die Temperatur der Dampfphasenzone 2 der Vorrichtung A gleich der Temperatur der Dampfphasenzone 2 der Vorrichtung B sein und eine Vorwärmung durch eine kürzere Verweildauer des Lötguts 5 in der Dampfphasenzone 2 der Vorrichtung A realisiert werden.

Nach der Vorwärmung des Lötguts 5 in der Vorrichtung A wird das Lötgut 5 durch die Schleuse 8 in die zweite Vorrichtung B eingebracht, in der der eigentliche Lötvorgang erfolgt. Hierzu wird das Lötgut 5, wie zuvor beschrieben, in der Dampfphasenzone 2 der zweiten Vorrichtung B eingetaucht und für eine gewisse Zeit dort gehalten bis das Lot aufgeschmolzen wurde, bevor es durch eine weitere Schleuse 9 aus der Vorrichtung B entfernt wird.

Des Weiteren betrifft die vorliegende Erfindung ein Verfahren zum Löten eines Lötguts 5 in einer Dampfphasenzone 2 mittels eines Systems, das mindestens zwei Vorrichtungen A und B sowie eine dritte Vorrichtung C aufweist. Hierbei wird das Lötgut 5 durch die Schleuse 9 aus der Vorrichtung B in die Vorrichtung C eingebracht. Durch Erzeugung eines Unterdrucks in der dritten Vorrichtung C wird unerwünschtes gasförmiges Material aus dem heißen Lot des Lötguts 5 entfernt.

Mit den Merkmalen der erfindungsgemäßen Vorrichtung, des erfindungsgemäßen Systems sowie der erfindungsgemäßen Verfahren lässt sich der Transport von Lötgut innerhalb der Vorrichtung bzw. des Systems vereinfachen, was sich vorteilhaft auf die Durchlaufzeit des Lötguts im Lötprozess auswirkt. Weiterhin ist es mit der Vorrichtung, dem System sowie den Verfahren der vorliegenden Erfindung möglich sehr großes Lötgut in einer Dampfphasenzone zu löten, da das Lötgut beim Eintauchen in die Dampfphasenzone nicht selbst bewegt werden muss.

Ein wesentlicher Vorteil gegenüber dem Stand der Technik besteht auch darin, dass während der Wärmeübertragung das Werkstück nicht bewegt wird und dennoch eine optimale Temperatursteuerung ermöglicht wird.

Durch die Vermeidung von Hubbewegungen des Werkstücks oder des Lötguts wird ein erschütterungsfreies Wärmebehandeln bzw. Löten bei gleichzeitiger Kontrolle und Steuerung der Temperaturübertragung durch Heben und Senken des Flüssigkeitstanks sichergestellt, so dass die Menge des kondensierenden Dampfes sehr gleichförmig und kontrollierbar verändert werden kann.

Weiterhin ist es mit der vorliegenden Erfindung möglich, den Dampf, der aufgrund des Eintauchens des Lötguts in die Dampfphasenzone aus der beheizten Kammer der Vorrichtung austritt, abzuleiten. Der abgeleitete Dampf bzw. das daraus entstehende Dampfkondensat kann wieder in die beheizte Kammer zurückgeführt werden. Somit werden Verluste der chemischen Substanzen, die für die Erzeugung der Dampfphase notwendig sind, reduziert.

## Patentansprüche

1. Vorrichtung (A, B) zum Wärmebehandeln eines Werkstücks, vorzugsweise zum Löten von Lötgut (5), in einer Dampfphasenzone mit:
(a) einer oben offenen ersten Kammer (1) mit einer Heizung (11), in der sich die Dampfphasenzone (2) befindet,
(b) einer zweiten Kammer (3) mit einem Boden und Seitenwänden, die die erste Kammer (1) umgibt und in der sich eine Halteeinrichtung (4) für das Werkstück bzw. das Lötgut (5) befindet, und
(c) einer Hubvorrichtung zum Anheben und Absenken der ersten Kammer (1) in der zweiten Kammer (3) und Eintauchen des Werkstücks bzw. des Lötguts (5) in die Dampfphasenzone (2) beim Anheben der ersten Kammer (1),
**gekennzeichnet durch**
eine Einrichtung zum Ableiten des durch die obere Öffnung aus der ersten Kammer (1) austretenden Dampfes (21), und
eine Einrichtung zum Rückführen des abgeleiteten Dampfes (21) bzw. von Dampfkondensat (22) in die erste Kammer (1).

2. Vorrichtung (A, B) gemäß Anspruch 1, wobei die zweite Kammer (3) mindestens eine erste Schleuse (6) aufweist, zum Einbringen des Werkstücks bzw. des Lötguts (5) in die zweite Kammer (3).

3. Vorrichtung (A, B) gemäß Anspruch 1 oder 2, wobei sich die Halteeinrichtung (4) in der zweiten Kammer auf Höhe der ersten Schleuse (6) befindet.

4. Vorrichtung (A, B) gemäß einem der Ansprüche 2 oder 3, die eine zweite Schleuse (7) aufweist, die sich vorzugsweise an einer der ersten Schleuse (6) gegenüberliegenden Seite der zweiten Kammer (3) befindet.

5. Vorrichtung (A, B) gemäß Anspruch 4, wobei sich die zweite Schleuse (7) auf Höhe der ersten Schleuse (6) und/oder der Halteeinrichtung (4) befindet.

6. System zum Wärmebehandeln eines Werkstücks, vorzugsweise zum Löten von Lötgut (5), in einer Dampfphasenzone (2), das zwei oder mehr Vorrichtungen (A, B) gemäß einem der voranstehenden Ansprüche aufweist,
wobei die zweite Vorrichtung (B) in Transportrichtung des Werkstücks bzw. des Lötguts (5) gesehen nach der ersten Vorrichtung (A) angeordnet ist und beide Vorrichtungen (A, B) über eine Schleuse (8) miteinander verbunden sind,
wobei die erste Vorrichtung (A) konfiguriert ist, um das Werkstück bzw. das Lötgut (5) vorzugsweise temperaturgesteuert vorzuwärmen, und
wobei die zweite Vorrichtung (B) konfiguriert ist, um das Werkstück bzw. das Lötgut (5) in der Dampfphasenzone (2) vorzugsweise temperaturgesteuert wärmezubehandeln bzw. zu löten.

7. System gemäß Anspruch 6 mit einer dritten Vorrichtung (C), die in Transportrichtung des Werkstücks bzw. des Lötguts (5) nach der zweiten Vorrichtung (B) angeordnet und konfiguriert ist, um durch Erzeugung eines Unterdrucks unerwünschtes gasförmiges Material aus dem Werkstück bzw. aus dem Lot zu entfernen.

8. Verfahren zum Wärmebehandeln eines Werkstücks, vorzugsweise zum Löten von Lötgut (5), in einer Dampfphasenzone (2) mittels einer Vorrichtung gemäß einem der Ansprüche 1 bis 5, das die folgenden Schritte aufweist:
a) Einbringen des Werkstücks bzw. des Lötguts (5) in die zweite Kammer (3),
b) Positionieren des Werkstücks bzw. des Lötguts (5) auf der Halteeinrichtung (4),
c) Eintauchen des Werkstücks bzw. des Lötguts (5) in die Dampfphasenzone (2),
d) Halten des Werkstücks bzw. des Lötguts (5) in der Dampfphasenzone (2),
e) Entfernen des Werkstücks bzw. des Lötguts (5) aus der Dampfphasenzone (2),
f) Entnahme des Werkstücks bzw. des Lötguts (5) aus der zweiten Kammer (3),
g) Ableiten des Dampfes (21), der beim Eintauchen des Werkstücks bzw. des Lötguts (5) in die Dampfphasenzone (2) aus der ersten Kammer (1) verdrängt wurde, und
h) Rückführen des abgeleiteten Dampfes (21) bzw. von daraus entstandenem Dampfkondensat (22) in die erste Kammer (1).

9. Verfahren zum Wärmebehandeln eines Werkstücks, vorzugsweise zum Löten eines Lötguts (5), in einer Dampfphasenzone (2) mittels eines Systems gemäß einem der Ansprüche 6 oder 7 entsprechend den Schritten a) bis h) des Verfahrens nach Anspruch 8.

10. Verfahren gemäß einem Anspruch 8 oder 9, wobei die erste Kammer (1) relativ zur Halteeinrichtung (4) der zweiten Kammer (3) vertikal angehoben wird, um das Werkstück bzw. das Lötgut (5) in die Dampfphasenzone (2) einzutauchen und wobei die ersten Kammer relativ zur Halteeinrichtung (4) der zweiten Kammer (3) vertikal abgesenkt wird, um das Werkstück bzw. das Lötgut (5) aus der Dampfphasenzone (2) zu entnehmen.

11. Verfahren gemäß einem der Ansprüche 8 bis 10, wobei die Entnahme des Werkstücks bzw. des Lötguts (5) aus der zweiten Kammer (3) durch die erste Schleuse (6) oder eine zweite Schleuse (7, 8) der zweiten Kammer (3) erfolgt.

12. Verfahren gemäß einem der Ansprüche 9 bis 11, wobei die Entnahme des Werkstücks bzw. des Lötguts (5) aus der zweiten Kammer (3) der ersten Vorrichtung (A) und das Einbringen des Werkstücks bzw. des Lötguts (5) in die zweite Kammer (3) der zweiten Vorrichtung (B) durch die Schleuse (8) zwischen der ersten Vorrichtung (A) und der zweiten Vorrichtung (B) erfolgt.

13. Verfahren gemäß einem der Ansprüche 9 bis 12 mit den folgenden Schritten:
i) Einbringen des Werkstücks bzw. des Lötguts (5) in die dritte Vorrichtung (C), und
j) Erzeugung eines Unterdrucks in der dritten Vorrichtung (C), um unerwünschtes gasförmiges Material aus dem Werkstück bzw aus dem Lot zu entfernen.

## Claims

1. A device (A, B) for heat treating a workpiece, preferably for soldering an item (5) to be soldered, in a vapor phase zone, comprising:
(a) a first chamber (1) open at the top and provided with a heater (11), which comprises the vapor phase zone (2),
(b) a second chamber (3) comprising a bottom and side walls, which surrounds the first chamber (1) and is provided with a mounting (4) for the workpiece or the item (5) to be soldered, and
(c) a lifting device for lifting and lowering the first chamber (1) in the second chamber (3) and immersing the workpiece or item (5) to be soldered in the vapor phase zone (2) when lifting the first chamber (1),
**characterized by**
means for discharging the vapor (21) escaping the first chamber (1) through the upper opening and
means for returning the discharged vapor (21) or vapor condensate (22) to the first chamber (1).

2. The device (A, B) according to claim 1, wherein the second chamber (3) comprises at least one first lock (6) for introducing the workpiece or the item (5) to be soldered into the second chamber (3).

3. The device (A, B) according to claim 1 or 2, wherein the mounting (4) is positioned in the second chamber at the level of the first lock (6).

4. The device (A, B) according to any of claims 2 or 3, comprising a second lock (7) that is preferably positioned at a side of the second chamber (3) opposite the first lock (6).

5. The device (A, B) according to claim 4, wherein the second lock (7) is positioned at the level of the first lock (6) and/or the mounting (4).

6. A system for heat treating a workpiece, preferably for soldering an item (5) to be soldered, in a vapor phase zone (2), comprising two or more devices (A, B) according to any of the preceding claims,
wherein the second device (B) is arranged downstream of the first device (A), as seen in the transport direction of the workpiece or item (5) to be soldered, and both devices (A, B) are connected to one another via a lock (8),
wherein the first device (A) is configured to preheat the workpiece or item (5) to be soldered preferably in a temperature-controlled manner, and
wherein the second device (B) is configured to heat-treat or solder the workpiece or item (5) to be soldered in the vapor phase zone (2) preferably in a temperature-controlled manner.

7. A system according to claim 6, comprising a third device (C) that is arranged downstream of the second device (B) in the transport direction of the workpiece or item (5) to be soldered and is configured to remove unwanted gaseous material from the workpiece or solder by generating a vacuum.

8. A method for heat treating a workpiece, preferably for soldering an item (5) to be soldered, in a vapor phase zone (2) by means of a device according to any of claims 1 to 5, comprising the following steps:
a) introducing the workpiece or item (5) to be soldered in the second chamber (3),
b) positioning the workpiece or item (5) to be soldered on the mounting (4), (2),
c) immersing the workpiece or item (5) to be soldered in the vapor phase zone
d) holding the workpiece or item (5) to be soldered in the vapor phase zone (2),
e) removing the workpiece or item (5) to be soldered from the vapor phase zone (2),
f) removing the workpiece or item (5) to be soldered from the second chamber (3),
g) discharging the vapor (21) displaced from the first chamber (1) when the workpiece or item (5) to be soldered is immersed in the vapor phase zone (2), and
h) returning the discharged vapor (21) or any vapor condensate (22) formed therefrom to the first chamber (1).

9. A method for heat treating a workpiece, preferably for soldering an item (5) to be soldered, in a vapor phase zone (2) by means of a system according to any of claim 6 or 7 according to steps a) to h) of the method according to claim 8.

10. The method according to any of claim 8 or 9, wherein the first chamber (1) is vertically lifted relative to the mounting (4) of the second chamber (3) so as to immerse the workpiece or item (5) to be soldered in the vapor phase zone (2) and wherein the first chamber is vertically lowered relative to the mounting (4) of a second chamber (3) so as to remove the workpiece or item (5) to be soldered from the vapor phase zone (2).

11. The method according to any of claims 8 to 10, wherein the workpiece or item (5) to be soldered is removed from the second chamber (3) through the first lock (6) or a second lock (7, 8) of the second chamber (3).

12. The method according to any of claims 9 to 11, wherein the workpiece or item (5) to be soldered is removed from the second chamber (3) of the first device (A) and is introduced in the second chamber (3) of the second device (B) through the lock (8) between the first device (A) and the second device (B).

13. The method according to any of claims 9 bis 12, comprising the following steps:
i) introducing the workpiece or item (5) to be soldered in the third device (C), and
j) generating a vacuum in the third device (C) so as to remove unwanted gaseous material from the workpiece or solder.

## Revendications

1. Dispositif (A, B) pour le traitement thermique d'une pièce, de préférence pour le brasage d'un article à braser (5), dans une zone en phase vapeur, comprenant :
(a) une première chambre (1) ouverte sur le haut avec un chauffage (11), dans laquelle se trouve la zone en phase vapeur (2),
(b) une deuxième chambre (3) avec un fond et des parois latérales entourant la première chambre (1) et dans laquelle se trouve un dispositif de maintien (4) pour la pièce ou l'article à braser (5), et
(c) un dispositif de levage pour soulever et abaisser la première chambre (1) vers la deuxième chambre (3) et pour plonger la pièce ou l'article à braser (5) dans la zone en phase vapeur (2) lors du soulèvement de la première chambre (1),
**caractérisé par**
un dispositif pour évacuer la vapeur (21) sortant de la première chambre (1) par l'ouverture supérieure, et
un dispositif pour renvoyer la vapeur (21) évacuée ou le condensat de vapeur (22) dans la première chambre (1).

2. Dispositif (A, B) selon la revendication 1, où la deuxième chambre (3) présente au moins un premier sas (6), pour l'introduction de la pièce ou de l'article à braser (5) dans la deuxième chambre (3).

3. Dispositif (A, B) selon la revendication 1 ou la revendication 2, où le dispositif de maintien (4) se trouve dans la deuxième chambre au niveau du premier sas (6).

4. Dispositif (A, B) selon la revendication 2 ou la revendication 3, comprenant un deuxième sas (7), situé de préférence sur un côté de la deuxième chambre (3) opposé au premier sas (6).

5. Dispositif (A, B) selon la revendication 4, où le deuxième sas (7) est situé au niveau du premier sas (6) et/ou du dispositif de maintien (4).

6. Système pour le traitement thermique d'une pièce, de préférence pour le brasage d'un article à braser (5), dans une zone (2) en phase vapeur, comprenant deux ou plusieurs dispositifs (A, B) selon l'une des revendications précédentes,
le deuxième dispositif (B) étant disposé en aval du premier dispositif (A) dans la direction de transport de la pièce ou de l'article à braser (5), et les deux dispositifs (A, B) étant reliés entre eux par un sas (8),
le premier dispositif (A) étant prévu pour préchauffer la pièce ou l'article à braser (5), de préférence en contrôlant la température, et
le deuxième dispositif (B) étant prévu pour traiter thermiquement ou braser la pièce ou l'article à braser (5) dans la zone en phase vapeur (2), de préférence en contrôlant la température.

7. Système selon la revendication 6, comprenant un troisième dispositif (C) disposé en aval du deuxième dispositif (B) dans la direction de transport de la pièce ou de l'article à braser (5), et prévu pour éliminer de la pièce ou de la pièce à braser la matière gazeuse indésirable par génération d'une pression négative.

8. Procédé de traitement thermique d'une pièce, de préférence de brasage d'un article à braser (5), dans une zone en phase vapeur (2) au moyen d'un dispositif selon l'une des revendications 1 à 5, comprenant les étapes suivantes :
a) introduction de la pièce ou de l'article à braser (5) dans la deuxième chambre (3),
b) positionnement de la pièce ou de l'article à braser (5) sur le dispositif de maintien (4),
c) immersion de la pièce ou de l'article à braser (5) dans la zone en phase vapeur (2),
d) maintien de la pièce ou de l'article à braser (5) dans la zone en phase vapeur (2),
e) retrait de la pièce ou de l'article à braser (5) de la zone en phase vapeur (2),
f) retrait de la pièce ou de l'article à braser (5) de la deuxième chambre (3),
g) évacuation de la vapeur (21) refoulée de la première chambre (1) lors de l'immersion de la pièce ou de l'article à braser (5) dans la zone en phase vapeur (2), et
h) retour dans la première chambre (1) de la vapeur (21) évacuée ou du condensat de vapeur (22) en résultant.

9. Procédé de traitement thermique d'une pièce, de préférence de brasage d'un article à braser (5), dans une zone en phase vapeur (2) au moyen d'un système selon l'une des revendications 6 ou 7, correspondant aux étapes a) à h) du procédé selon la revendication 8.

10. Procédé selon la revendication 8 ou la revendication 9, où la première chambre (1) est soulevée verticalement par rapport au dispositif de maintien (4) de la deuxième chambre (3) pour immerger la pièce ou l'article à braser (5) dans la zone en phase vapeur (2), et où la première chambre est abaissée verticalement par rapport au dispositif de maintien (4) de la deuxième chambre (3) pour retirer la pièce ou l'article à braser (5) de la zone en phase vapeur (2).

11. Procédé selon l'une des revendications 8 à 10, où le retrait de la pièce ou de l'article à braser (5) de la deuxième chambre (3) est réalisé par le premier sas (6) ou par un deuxième sas (7, 8) de la deuxième chambre (3).

12. Procédé selon l'une des revendications 9 à 11, où le retrait de la pièce ou de l'article à braser (5) de la deuxième chambre (3) du premier dispositif (A) et l'introduction de la pièce ou de l'article à braser (5) dans la deuxième chambre (3) du deuxième dispositif (B) sont réalisés par le sas (8) entre le premier dispositif (A) et le deuxième dispositif (B).

13. Procédé selon l'une des revendications 9 à 12, comprenant les étapes suivantes :
i) introduction de la pièce ou de l'article à braser (5) dans le troisième dispositif (C), et
j) génération d'une pression négative dans le troisième dispositif (C) afin d'éliminer la matière gazeuse indésirable de la pièce ou de la brasure.
